# EUROPEAN PATENT SPECIFICATION

(11) **EP 3 483 325 B1**
(45) Date of publication and mention of the grant of the patent: **24.03.2021**
(21) Application number: 18204522.9
(22) Date of filing: 06.11.2018
(51) Int. Cl.: D06F 33/30, D06F 34/05, G06Q 20/12, G06Q 20/18, G07C 9/00, G07F 17/20, H04L 12/28, D06F 39/14, D06F 101/00, D06F 103/38, D06F 105/44, D06F 34/20

(54) **CONTROL METHOD AND SYSTEM FOR DOOR LOCK OF WASHING MACHINE**
STEUERUNGSVERFAHREN UND -SYSTEM FÜR TÜRSCHLOSS EINER WASCHMASCHINE
PROCÉDÉ DE COMMANDE ET SYSTÈME DE VERROUILLAGE DE PORTE DE MACHINE À LAVER

(30) Priority: 08.11.2017 CN 201711088781
(43) Date of publication of application: 15.05.2019
(73) Proprietor: BSH Hausgeräte GmbH, 81739 München (DE)
(72) Inventor: Li, Chao, Nanjing City 210014 (CN); Mu, Jinhong, Nanjing 210096 (CN)

(56) References cited:
- WO-A1-2016/107088
- WO-A1-2018/046426
- CN-A- 106 991 761
- CN-A- 107 180 467
- CN-B- 101 967 739
- KR-A- 20160 066 975
- KR-B1- 101 602 483
- US-A- 5 771 717

## Description

### BACKGROUND

### Technical Field

The present invention relates to the field of control technologies of public washing machines, and specifically, to a control method and system for a door lock of a washing machine.

### Related Art

Publication CN 106991761 A discloses a clothes washing method.

The self-service washing industry currently enters people's daily life. Self-service laundries already rise quietly in densely inhabited districts such as large-scale residence communities, bachelor apartments, and schools. However, an existing self-service washing machine still has the following problem. That is, after a current washing procedure ends, a user cannot return to the laundry to remove washed clothes in time for various reasons. Consequently, the clothes may occupy the washing machines or be lost. In some cases, the user may authorize others to get back the clothes. However, it is possible to take wrong clothes, and therefore security of the clothes still cannot be well ensured.

For the problems above, at present, no effective solution is proposed.

### SUMMARY

Embodiments of the present invention provide a control method and system for a door lock of a washing machine, to at least ensure convenience of getting back washed clothes from a self-service washing machine and clothes security.

To resolve the foregoing problems, the present invention provides a control method for a door lock of a washing machine as defined in independent claim 1. According to the method, others can be authorized to get back clothes, and security of the clothes already washed can be ensured.

The method further includes: returning, by the server, an unlocking control instruction to the authorized end after receiving verified information, and controlling the door lock of the washing machine by using the authorized end. The door lock of the washing machine may be controlled by using the server or the authorized end.

Preferably, the server sends the unlocking control instruction to the washing machine through radio communication.

According to the invention, the authorized end controls the door lock of the washing machine through radio communication or voice.

The verification code includes at least one of the following: a barcode, a two-dimensional barcode, digits, and an image.

The embodiments of the present invention further disclose a control system for a door lock of a washing machine, as defined in claim 4.

Compared with the prior art, the technical solutions of the present invention have the following advantages:
By using the foregoing solutions, that others can be authorized to control a door lock of a washing machine in a self-service laundry, so that when it is inconvenient for a user to get back clothes in time, the user authorizes others to get back the clothes, thus reducing the occupancy after the self-service washing machine in the self-service laundry ends washing, and improving the utilization of the washing machine.

### BRIEF DESCRIPTION OF THE DRAWINGS

The disclosure will become more fully understood from the detailed description given herein below for illustration only, and thus are not limitative of the disclosure, and wherein:
FIG. 1 is a schematic diagram of a system network applied to an embodiment which is not covered by the present invention;
FIG. 2 is a flow chart of a method according to an embodiment which is not covered by the present invention;
FIG. 3 is a flow chart of a specific implementation method according to an embodiment which is not covered by the present invention;
FIG. 4 is a block diagram of a device according to an embodiment which is not covered by the present invention;
FIG. 5 is a schematic diagram of another system network applied to an embodiment of the present invention;
FIG. 6 is a flow chart of a method according to an embodiment of the present invention; and
FIG. 7 is a flow chart of a specific implementation method according to an embodiment of the present invention.

### DETAILED DESCRIPTION

The following describes the present invention in detail with reference to accompanying drawings and embodiments. It should be noted that the embodiments in this application and features in the embodiments can be mutually combined without conflict.

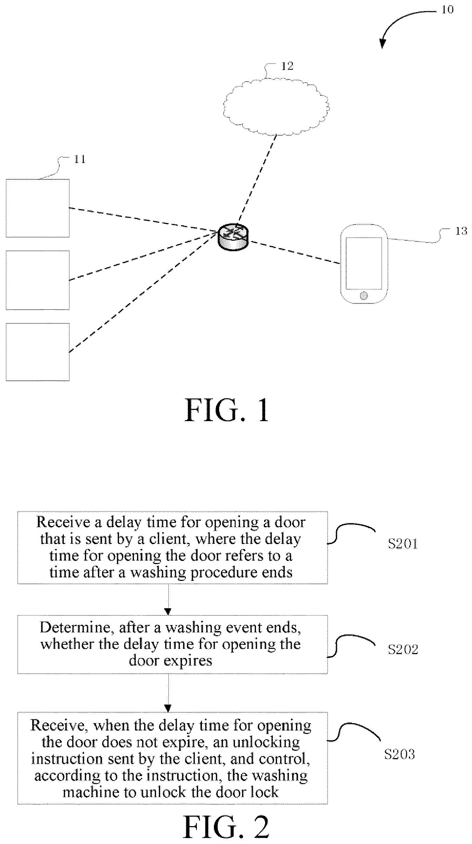

An embodiment which is not covered by the present invention is based on a management system 10 of a self-service washing machine that is shown in FIG. 1. The system includes a washing device 11, a server 12, and a client 13. The washing device 11 is disposed in a laundry and is configured to perform at least one of a washing operation or a drying operation. The washing device 11 is mainly a washing machine, a drying machine, a washing/drying machine, or the like. A communications module is disposed on the washing device, and may be connected to the server in a wired or wireless manner, for example, connected to a remote server by using a network cable or a router.

The server 12 is mainly a cloud server, is in communication connection to the washing device, and manages and controls the washing device to work. The server manages and controls operation of all washing devices, can obtain status of and operation information of all the washing devices in real time, and can process information obtained from the client and the washing device, including processing a reserved time, processing a washing status, charging, and so on.

The client 13 is a mobile terminal, or may be a tablet computer, an intelligent terminal, a personal computer, or the like. An application (APP) is disposed on the client, can be in communication connection to the server, and can inquire about information about a washing machine in a vacant state that is provided by the server in real time, for example, inquire whether the washing machine is marked as "reserved". The APP can inquire about or receive a remaining time of a washing procedure, washing expense, or the like as well, and reserve, by using the client, a time after a current washing procedure ends, thus delaying removing clothes. In addition, the client may achieve a function of communicating with the server and the washing device by means of an existing application, for example, a WeChat applet.

Based on the foregoing management system of the washing machine, after a washing procedure reserved by a user ends, a door lock of the washing machine can be controlled according to a delay time purchased by the user, thus occupying the washing machine with compensation in the reserved time. The following describes a method in detail.

FIG. 2 provides a control method for a door lock of a washing machine. The method is applied to a server and includes the following steps:
S201: Receive a delay time for opening a door that is sent by a client, where the delay time for opening the door refers to a time after a washing procedure ends.
S202: Determine, after a washing event ends, whether the delay time for opening the door expires.
S203: Receive, when the delay time for opening the door does not expire, an unlocking instruction sent by the client, and control, according to the instruction, the washing machine to unlock the door lock.

The delay time for opening the door may be pre-purchased by using the client. A purchase time may be any time period before a current washing procedure ends, including a time period when reserving washing and a time period during washing.

Preferably, reminding information is sent to the client before the delay time for opening the door expires, to remind the user whether a delay time needs to be purchased; and the time is extended before the delay time for opening the door expires.

Preferably, if the door lock is unlocked before the delay time for opening the door expires, expense corresponding to a time not used can be returned. That is, the server calculates a remaining delay time for opening the door, and returns the expense corresponding to the remaining time.

In addition, when the delay time expires, the server controls the washing machine to unlock the door lock.

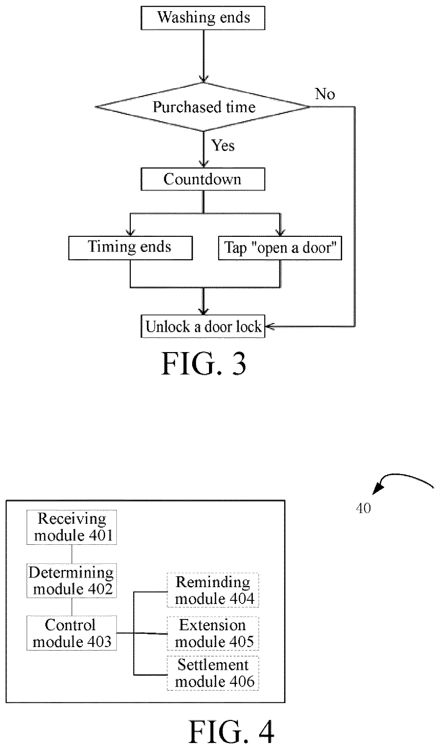

Descriptions are provided below with reference to a specific implementation. As show in FIG. 3, when using a self-service washing machine, a user may pre-purchase a time after a washing procedure ends, that is, a delay time for opening a door. After washing ends this time, the washing machine does not open the door provisionally. After the user taps an "open the door" button on a client, a cloud server sends an instruction to a communications module of the washing machine, to control the washing machine to unlock a door lock, and make it convenient for the user to remove clothes. After the time is purchased, a countdown timer starts to time after the washing procedure ends. If counting down ends and "open the door" is still not tapped, it is considered that the user quits management of the clothes, and the washing machine automatically opens the door, to make it convenient for other users to wash clothes. If the purchased time is not all used, the server reduces expense according to a remaining time and returns the expense to an original account of the user.

By using the foregoing method, after a washing procedure of a self-service washing machine ends, the washing machine can be provisionally occupied with compensation according to a reserved delay time, and others cannot unlock a door lock in the reserved time, thus reducing phenomena in which clothes are not removed in time and therefore lost.

As shown in FIG. 4, an embodiment which is not covered by the present invention further provides a control device 40 for a door lock of a washing machine, including: a receiving module 401, configured to receive a delay time for opening a door that is sent by a client, where the delay time for opening the door refers to a time after a washing procedure ends; a determining module 402, configured to determine, after a washing event ends, whether the delay time for opening the door expires; and a control module 403, configured to receive, when the delay time for opening the door does not expire, an unlocking instruction sent by the client, and control, according to the instruction, the washing machine to unlock the door lock.

Preferably, the receiving module 401 is further configured to receive a delay time for opening the door that is purchased by the client.

The device 40 further includes a reminding module 404, configured to send reminding information to the client before the delay time for opening the door expires.

The device 40 further includes an extension module 405, configured to increase the delay time for opening the door before the delay time for opening the door expires.

Preferably, the control module 403 is further configured to control, when the delay time already expires, the washing machine to unlock the door lock.

The device 40 further includes a settlement module 406, configured to calculate, after the washing machine unlocks the door lock, a remaining delay time for opening the door, and return expense corresponding to the remaining time.

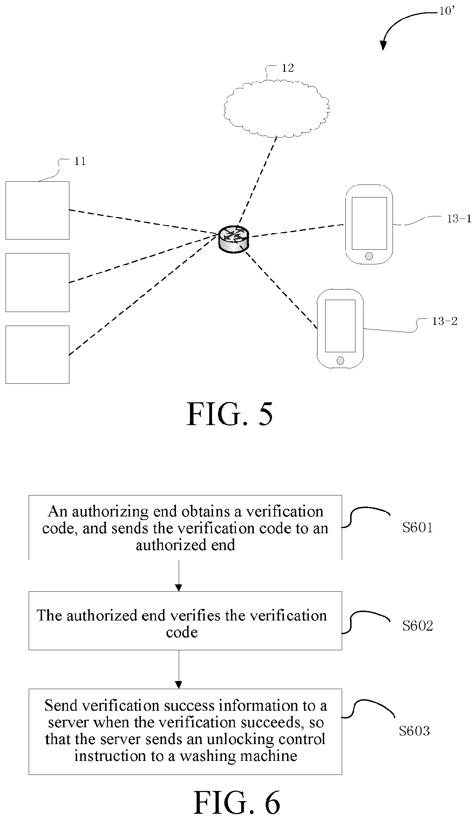

Referring to FIG. 5, FIG. 5 shows a control system for a door lock of a washing machine according to an embodiment of the present invention. The system further includes two clients 13 in communication with the server 12 or the washing devices 11 based on the management system 10 of the self-service washing machine in FIG. 1. In this case, the two clients are respectively an authorizing end 13-1 and an authorized end 13-2. The two clients may directly communicate with washing machines in a laundry as well. The control system can achieve a function of getting back clothes through authorization. A specific method is as follows. As shown in FIG. 6, a control method for a door lock of a washing machine includes the following steps:
S601: An authorizing end obtains a verification code, and sends the verification code to an authorized end, where specifically, the authorizing end requests the verification code from a server; and the server receives the request of the authorizing end and return the verification code to the authorizing end.
S602: The authorized end verifies the verification code.
S603: Send verification success information to the server when the verification succeeds, so that the server sends an unlocking control instruction to the washing machine; or the server returns an unlocking control instruction to the authorized end after receiving verified information, and control the door lock of the washing machine by using the authorized end.

Preferably, the server sends the unlocking control instruction to the washing machine through radio communication.

The authorized end controls the door lock of the washing machine through radio communication or voice.

The verification code includes at least one of the following: a barcode, a two-dimensional barcode, digits, and an image.

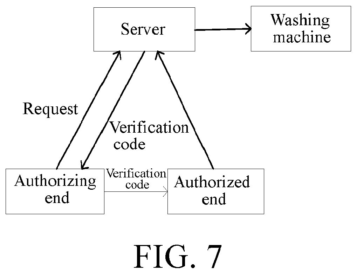

A specific implementation manner is as follows. As shown in FIG. 7, a user taps an "authorization" button on an application interface of a client. The client sends a verification code request to a server. The server sends a verification code to the user, that is, an authorizing end. The user forwards the verification code to a person replacing the user to get back clothes, that is, an authorized end. After reaching a laundry, the person enters the verification code on a client of the person. The client uploads the verification code to cloud server for verification. After the verification succeeds, the server sends an instruction for unlocking a door lock to a communications module of a washing machine to control the washing machine to unlock the door lock. Alternatively, the server returns an unlocking control instruction to the authorized end, and controls the door lock of the washing machine by using the authorized end. If the user purchases a time after washing ends, after the person replacing the user to get back the clothes unlocks the door lock, the system converts a remaining time into expense and returns the expense to the user.

In addition, the self-service washing system can further achieve a disinfection cleaning procedure. The washing machine has a barrel cleaning procedure, and can effectively perform high temperature sterilization. A user may pay, before washing clothes of the user, to execute the barrel cleaning procedure to disinfect a barrel of the washing machine. After the barrel cleaning procedure is completed, the to-be-washed clothes are put into the barrel, and the washing procedure is executed.

The self-service washing system can also achieve remote fault detection. The washing machine includes a mechanical component and a sensor. During operation of the washing machine, a mainboard of the washing machine records, in real time, machine operation status data fed back by the mechanical component and the sensor. The communications module of the washing machine may read data in the mainboard, and upload the data to cloud. The cloud records all operation state data of the washing machine, and compares the data with standard data by using an algorithm. When the cloud detects that the state data of the washing machine already departs from a standard range, the cloud issues a warning to a system administrator. The system administrator performs corrective maintenance in time before the washing machine has a fault.

A person of ordinary skill in the art may understand that all or some of the steps of the methods in the embodiments may be completed by a program instructing relevant hardware. The program may be stored in a computer readable storage medium. The storage medium may include a ROM, a RAM, a magnetic disk, an optical disc, or the like.

## Claims

1. A control method for a door lock of a washing machine (11), applied to a self-service washing machine (11), **characterized in that**, the method comprises:
obtaining (S601), by an authorizing end (13-1), a verification code, and sending, by the authorizing end (13-1), the verification code to an authorized end (13-2);
verifying (S602), by the authorized end (13-2), the verification code; and
sending (S603) verification success information to a server (12) when the verification succeeds, so that the server (12) sends an unlocking control instruction to the washing machine (11); or returning, by the server, an unlocking control instruction to the authorized end (13-2) after receiving verified information, and controlling the door lock of the washing machine (11) by using the authorized end (13-2), wherein
the obtaining (S601), by the authorizing end (13-1), a verification code comprises:
requesting, by the authorizing end (13-1), the verification code from the server (12), so that the server (12) receives the request of the authorizing end (13-1) and returns the verification code to the authorizing end (13-1), wherein
the controlling the door lock of the washing machine (11) by using the authorized end (13-2) comprises: controlling, by the authorized end (13-2), the door lock of the washing machine (11) through radio communication or voice, wherein
the authorizing end (13-1) and the authorized end (13-2) are two clients, which are a mobile terminal, a tablet computer, an intelligent terminal or a personal computer,
so that others can be authorized to control the door lock of the washing machine in a self-service laundry, so that when it is inconvenient for a user to get back clothes in time, the user authorizes others to get back the clothes.

2. The method according to claim 1, **characterized in that**, that the server (12) sends an unlocking control instruction to the washing machine (11) comprises: sending, by the server (12), the unlocking control instruction to the washing machine (11) through radio communication.

3. The method according to claim 1 or 2, **characterized in that**, the verification code comprises at least one of the following: a barcode, a two-dimensional barcode, digits, and an image.

4. A control system (10') for a door lock of a washing machine (11), **characterized in that**, the system (10') comprises an authorizing end (13-1), an authorized end (13-2), and a server (12), wherein the authorizing end (13-1) obtains a verification code, and sends the verification code to the authorized end (13-2); and
the authorized end (13-2) verifies the verification code, and sends verification success information to the server (12) when the verification succeeds, so that the server (12) sends an unlocking control instruction to the washing machine (11); or the server (12) returns an unlocking control instruction to the authorized end (13-2) after receiving verified information, and controls the door lock of the washing machine (11) by using the authorized end (13-2), wherein
the authorizing end (13-1) obtains a verification code comprises:
requesting the verification code from the server (12); and
receiving, by the server (12), the request of the authorizing end (13-1) and returning the verification code to the authorizing end (13-1), wherein
the controlling the door lock of the washing machine (11) by using the authorized end (13-2) comprises: controlling, by the authorized end (13-2), the door lock of the washing machine (11) through radio communication or voice, wherein
the authorizing end (13-1) and the authorized end (13-2) are two clients, which are a mobile terminal, a tablet computer, an intelligent terminal or a personal computer,
so that others can be authorized to control the door lock of the washing machine in a self-service laundry, so that when it is inconvenient for a user to get back clothes in time, the user authorizes others to get back the clothes.

## Patentansprüche

1. Steuerverfahren für eine Türverriegelung einer Waschmaschine (11) bei Anwendung auf eine Waschsalon-Waschmaschine (11), **dadurch gekennzeichnet, dass** das Verfahren Folgendes umfasst:
Einholen (S601) eines Verifizierungscodes durch ein autorisierendes Ende (13-1) und Senden des Verifizierungscodes zu einem autorisierten Ende (13-2) durch das autorisierende Ende (13-1),
Verifizieren (S602) des Verifizierungscodes durch das autorisierte Ende (13-2) und
Senden (S603) von Verifizierungserfolgsinformationen an einen Server (12), wenn die Verifizierung erfolgreich ist, so dass der Server (12) eine Entriegelungssteueranweisung an die Waschmaschine (11) sendet, oder nach dem Empfangen von verifizierten Informationen Zurücksenden einer Entriegelungssteueranweisung an das autorisierte Ende (13-2) durch den Server und Steuern der Türverriegelung der Waschmaschine (11) mithilfe des autorisierten Endes (13-2), wobei
das Einholen (S601) eines Verifizierungscodes durch das autorisierende Ende (13-1) Folgendes umfasst:
Anfordern des Verifizierungscodes vom Server (12) durch das autorisierende Ende (13-1), so dass der Server (12) die Anforderung des autorisierenden Endes (13-1) empfängt und den Verifizierungscode an das autorisierende Ende (13-1) zurücksendet, wobei
das Steuern der Türverriegelung der Waschmaschine (11) mithilfe des autorisierten Endes (13-2) Folgendes umfasst: Steuern der Türverriegelung der Waschmaschine (11) per Funkkommunikation oder Sprache durch das autorisierte Ende (13-2), wobei
das autorisierende Ende (13-1) und das autorisierte Ende (13-2) zwei Clients sind, bei denen es sich um ein mobiles Endgerät, einen Tablet-Computer, ein intelligentes Endgerät oder einen Personalcomputer handelt,
so dass andere zum Steuern der Türverriegelung der Waschmaschine in einem Waschsalon autorisiert werden können, so dass ein Benutzer, wenn es für ihn ungünstig ist, Kleidungsstücke rechtzeitig abzuholen, andere dazu autorisiert, die Kleidungsstücke abzuholen.

2. Verfahren nach Anspruch 1, **dadurch gekennzeichnet, dass** das Senden einer Entriegelungssteueranweisung durch den Server (12) an die Waschmaschine (11) Folgendes umfasst: Senden der Entriegelungssteueranweisung an die Waschmaschine (11) per Funkkommunikation durch den Server (12).

3. Verfahren nach Anspruch 1 oder 2, **dadurch gekennzeichnet, dass** der Verifizierungscode einen Strichcode, einen zweidimensionalen Strichcode, Ziffern und/oder ein Bild umfasst.

4. Steuersystem (10') für eine Türverriegelung einer Waschmaschine (11), **dadurch gekennzeichnet, dass** das System (10') ein autorisierendes Ende (13-1), ein autorisiertes Ende (13-2) und einen Server (12) umfasst, wobei das autorisierende Ende (13-1) einen Verifizierungscode einholt und den Verifizierungscode an das autorisierte Ende (13-2) sendet, und
wobei das autorisierte Ende (13-2) den Verifizierungscode verifiziert und Verifizierungserfolgsinformationen an den Server (12) sendet, wenn die Verifizierung erfolgreich ist, so dass der Server (12) eine Entriegelungssteueranweisung an die Waschmaschine (11) sendet, oder der Server (12) nach dem Empfangen von verifizierten Informationen eine Entriegelungssteueranweisung an das autorisierte Ende (13-2) zurücksendet und die Türverriegelung der Waschmaschine (11) mithilfe des autorisierten Endes (13-2) steuert, wobei
das Einholen eines Verifizierungscodes durch das autorisierende Ende (13-1) Folgendes umfasst:
Anfordern des Verifizierungscodes vom Server (12) und
Empfangen der Anforderung des autorisierenden Endes (13-1) durch den Server (12) und Zurücksenden des Verifizierungscodes an das autorisierende Ende (13-1), wobei
das Steuern der Türverriegelung der Waschmaschine (11) mithilfe des autorisierten Endes (13-2) Folgendes umfasst: Steuern der Türverriegelung der Waschmaschine (11) per Funkkommunikation oder Sprache durch das autorisierte Ende (13-2), wobei
das autorisierende Ende (13-1) und das autorisierte Ende (13-2) zwei Clients sind, bei denen es sich um ein mobiles Endgerät, einen Tablet-Computer, ein intelligentes Endgerät oder einen Personalcomputer handelt,
so dass andere zum Steuern der Türverriegelung der Waschmaschine in einem Waschsalon autorisiert werden können, so dass ein Benutzer, wenn es für ihn ungünstig ist, Kleidungsstücke rechtzeitig abzuholen, andere dazu autorisiert, die Kleidungsstücke abzuholen.

## Revendications

1. Procédé de commande pour un verrouillage de porte d'un lave-linge (11), appliqué à un lave-linge en libre-service (11), **caractérisé en ce que** le procédé comprend :
l'obtention (S601), par une extrémité autorisante (13-1), d'un code de vérification, et l'envoi, par l'extrémité autorisante (13-1), du code de vérification à une extrémité autorisée (13-2) ;
la vérification (S602), par l'extrémité autorisée (13-2), du code de vérification ; et
l'envoi (S603) des informations de réussite de la vérification à un serveur (12) lorsque la vérification réussit, de sorte que le serveur (12) envoie une instruction de commande de déverrouillage au lave-linge (11) ; ou le renvoi, par le serveur, d'une instruction de commande de déverrouillage à l'extrémité autorisée (13-2) après la réception d'informations vérifiées, et la commande du verrouillage de porte du lave-linge (11) en utilisant l'extrémité autorisée (13-2), dans lequel
l'obtention (S601), par l'extrémité autorisante (13-1), d'un code de vérification comprend :
la demande, par l'extrémité autorisante (13-1), du code de vérification au serveur (12), de sorte que le serveur (12) reçoive la demande de l'extrémité autorisante (13-1) et renvoie le code de vérification à l'extrémité autorisante (13-1), dans lequel
la commande du verrouillage de porte du lave-linge (11) en utilisant l'extrémité autorisée (13-2) comprend : la commande, par l'extrémité autorisée (13-2), du verrouillage de porte du lave-linge (11) par radiocommunication ou par la voix, dans lequel
l'extrémité autorisante (13-1) et l'extrémité autorisée (13-2) sont deux clients étant un terminal mobile, une tablette numérique, un terminal intelligent ou un ordinateur personnel,
de sorte qu'autrui peut être autorisé à commander le verrouillage de porte du lave-linge dans un lavoir automatique, de sorte que lorsque la récupération du linge s'avère peu pratique sur le plan temporel pour un utilisateur, l'utilisateur autorise autrui à récupérer le linge.

2. Procédé selon la revendication 1, **caractérisé en ce que** le serveur (12) envoie une instruction de commande de déverrouillage au lave-linge (11) comprenant : l'envoi, par le serveur (12), de l'instruction de commande de déverrouillage au lave-linge (11) par radiocommunication.

3. Procédé selon la revendication 1 ou 2, **caractérisé en ce que** le code de vérification comprend au moins un des éléments suivants : un code-barres, un code-barres en deux dimensions, des chiffres et une image.

4. Système de commande (10') pour un verrouillage de porte d'un lave-linge (11), **caractérisé en ce que** le système (10') comprend une extrémité autorisante (13-1), une extrémité autorisée (13-2) et un serveur (12), dans lequel l'extrémité autorisante (13-1) obtient un code de vérification et envoie le code de vérification à l'extrémité autorisée (13-2) ; et
l'extrémité autorisée (13-2) vérifie le code de vérification et envoie des informations de réussite de la vérification au serveur (12) lorsque la vérification réussit, de sorte que le serveur (12) envoie une instruction de commande de déverrouillage au lave-linge (11) ; ou le serveur (12) renvoie une instruction de commande de déverrouillage à l'extrémité autorisée (13-2) après la réception d'informations vérifiées, et commande le verrouillage de porte du lave-linge (11) en utilisant l'extrémité autorisée (13-2), dans lequel
l'extrémité autorisante (13-1) obtient un code de vérification comprenant :
la demande du code de vérification au serveur (12) ; et
la réception, par le serveur (12), de la demande de l'extrémité autorisante (13-1) et le renvoi du code de vérification à l'extrémité autorisante (13-1), dans lequel
la commande du verrouillage de porte du lave-linge (11) en utilisant l'extrémité autorisée (13-2) comprend : la commande, par l'extrémité autorisée (13-2), du verrouillage de porte du lave-linge (11) par radiocommunication ou par la voix, dans lequel
l'extrémité autorisante (13-1) et l'extrémité autorisée (13-2) sont deux clients étant un terminal mobile, une tablette numérique, un terminal intelligent ou un ordinateur personnel,
de sorte qu'autrui puisse être autorisé à commander le verrouillage du lave-linge dans un lavoir automatique, de sorte que lorsque la récupération du linge s'avère peu pratique sur le plan temporel pour un utilisateur, l'utilisateur autorise autrui à récupérer le linge.
